Europäisches Patentamt

European Patent Office

Office européen des brevets

(11) Veröffentlichungsnummer: **0 481 232 A2**

# EUROPÄISCHE PATENTANMELDUNG

(21) Anmeldenummer: **91115817.8**

(22) Anmeldetag: **18.09.91**

(51) Int. Cl.⁵: **G01B 7/00**, B23B 49/00

(30) Priorität: **19.10.90 DE 4033181**

(43) Veröffentlichungstag der Anmeldung:
**22.04.92 Patentblatt 92/17**

(84) Benannte Vertragsstaaten:
**DE FR IT**

(71) Anmelder: **Ludwig, Rainer**
**Tuttlinger Strasse 8**

**W-7201 Balgheim(DE)**

(72) Erfinder: **Ludwig, Rainer**
**Tuttlinger Strasse 8**
**W-7201 Balgheim(DE)**

(74) Vertreter: **Hoeger, Stellrecht & Partner**
**Uhlandstrasse 14 c**
**W-7000 Stuttgart 1(DE)**

(54) **Prüfeinrichtung.**

(57) Um eine Einrichtung zur Überprüfung eines in einer definierten Position stehenden Maschinenteils, insbesondere eines Werkzeugs einer Werkzeugmaschine, umfassend ein Prüfelement, welches zur Durchführung einer Prüfbewegung durch einen Antrieb von einer Ausgangsstellung auf einer Bahn relativ zu der Position des Maschinenteils bewegbar ist, und eine ein Prüfsignal abgebende Nachweisschaltung, derart zu verbessern, daß diese bei allen Maschinenteilen einsetzbar, verschleißarm und konstruktiv einfach ausführbar ist, wird vorgeschlagen, daß das Prüfelement einen berührungslosen Sensor umfaßt und daß die Nachweisschaltung während der Prüfbewegung ein Ausgangssignal des Sensors registriert und aufgrund desselben das Prüfsignal abgibt.

FIG. 1

Die Erfindung betrifft eine Einrichtung zur Überprüfung eines in einer definierten Position stehenden Maschinenteils, insbesondere eines Werkzeugs einer Werkzeugmaschine, umfassend ein Prüfelement, welches zur Durchführung einer Prüfbewegung durch einen Antrieb von einer Ausgangsstellung auf einer Bahn relativ zu der Position des Maschinenteils bewegbar ist, und eine ein Prüfsignal abgebende Nachweisschaltung.

Aus der DE-OS 31 38 603 ist eine derartige Einrichtung bekannt. Bei dieser bekannten Einrichtung wird an einem Antriebsmotor kleiner Leistung auf der Antriebswelle eine Stahlnadel befestigt. Beim Prüfen wird dann diese Stahlnadel in Richtung auf das zu prüfende Werkzeug geschwenkt wobei deren Bewegung bei vorhandenem Werkzeug blockiert wird. Ferner ist ein Schalter vorgesehen, der von der Stahlnadel dann betätigbar ist, wenn die Stahlnadel über die definierte Position hinausläuft, in welcher diese normalerweise von dem in der definierten Position stehenden Maschinenteil blockiert wird.

Nachteilig ist bei diesem System, daß bei rotierenden Maschinenteilen, insbesondere bei rotierenden Hartmetallwerkzeugen die Tastnadel sehr schnell verschleißt und zu häufigen Ausfallzeiten führt.

Darüber hinaus ist es mit diesen Systemen aufgrund der notwendigen Abdichtung der Antriebswelle für die Stahlnadel gegen eindringende Flüssigkeit nur mit großen Schwierigkeiten möglich, Maschinenteile, insbesondere Werkzeuge, mit einem Durchmesser von weniger als 1 Millimeter zu prüfen. Dies liegt daran, daß bei einem hohen Drehmoment, welches eine einfache Abdichtung der Antriebswelle zulassen würde, die Möglichkeit besteht, daß ein sehr dünnes Werkzeug abbricht, während bei niedrigen Drehmomenten die Abdichtung der Antriebswelle äußerst problematisch ist.

Ein weiterer Nachteil des für dünne Werkzeuge erforderlichen geringen Drehmoments besteht darin, daß bei den heute gebräuchlichen Kühlsystemen ein Wasserdruck bis zu 30 bar verwendet wird und damit Kühlwasserstrahl, sofern er auf die Tastnadel trifft, diese wie ein Maschinenteil blockiert und damit eine Falschmeldung erzeugt.

Der Erfindung liegt daher die Aufgabe zugrunde, eine Einrichtung der gattungsgemäßen Art derart zu verbessern, daß diese bei allen Maschinenteilen einsetzbar, verschleißarm und konstruktiv einfach ausführbar ist.

Diese Aufgabe wird bei einer Einrichtung der eingangs beschriebenen Art erfindungsgemäß dadurch gelöst, daß das Prüfelement einen berührungslosen Sensor umfaßt und daß die Nachweisschaltung während der Prüfbewegung ein Ausgangssignal des Sensors registriert und aufgrund desselben das Prüfsignal abgibt.

Der Vorteil der vorliegenden Erfindung ist somit darin zu sehen, daß durch den berührungslosen Sensor die Möglichkeit geschaffen wurde, die Maschinenteile berührungslos zu prüfen, damit die Probleme mit dem Verschleiß entfallen sind und außerdem die für die Prüfbewegung des Sensors aufzuwendende Kraft völlig unabhängig von den Maschinenteilen oder Werkzeugen gewählt werden kann, da eine Berührung nicht mehr erfolgt und somit auch die Gefahr eines Abbrechens derselben nicht mehr besteht.

Prinzipiell wäre es möglich, den Sensor ausgehend von der Ausgangsstellung jeweils so weit zu bewegen, bis dieser ein Maschinenteil erfaßt. Dies hätte jedoch eine aufwendige Nachweisschaltung zur Folge, außerdem können Probleme dadurch auftreten, daß der Sensor gar nicht erfaßt, ob das gewünschte Maschinenteil in der definierten Position steht, sondern ein ganz anderes Maschinenteil im Rahmen seiner Bewegung erfaßt. Aus diesem Grund ist es, um die erfindungsgemäße Einrichtung konstruktiv möglichst einfach und zuverlässig zu gestalten, von Vorteil, wenn der Sensor zur Durchführung einer Prüfbewegung zwischen der Ausgangsstellung und einer definierten Endstellung bewegbar ist. Damit ist stets festgelegt, welche Bahn der Sensor im Extremfall durchläuft.

Darüber hinaus läßt sich die erfindungsgemäße Einrichtung besonders vorteilhaft dann einsetzen, wenn die Lage der Ausgangsstellung und/oder der Endstellung einstellbar ist, da somit je nach Anwendungsfall, das heißt beispielsweise je nach Maschine oder je nach dem auf der Maschine gefahrenen Steuerprogramm, die Bahn des Sensors variiert werden kann.

Zur Festlegung der Ausgangsstellung und der Endstellung sieht ein vorteilhaftes Ausführungsbeispiel, welches konstruktiv besonders einfach realisierbar ist und besonders zuverlässig arbeitet, vor, daß die Ausgangsstellung und/oder die Endstellung durch ein gegen mindestens einen Anschlag laufendes mechanisches Anschlagelement festlegbar sind.

Bei Verwendung eines mechanischen Anschlagelements, das gegen Anschläge läuft, besteht stets das Problem der Verschleißbeständigkeit desselben, da der Arm möglichst schnell bewegt werden soll und somit beim Gegenlaufen des Anschlagelements gegen die Anschläge große Kräfte auftreten. Aus diesem Grund ist es besonders vorteilhaft, wenn jeder Anschlag durch eine konkav gekrümmte Anschlagfläche gebildet ist.

Eine derart konkav gekrümmte Anschlagfläche erleichtert ein flächenhaftes Anlegen des Anschlagelements an derselben und ist daher vorteilhafter als eine ebene Anschlagfläche.

Ein weiteres vorteilhaftes Ausführungsbeispiel der erfindungsgemäßen Lösung unter Verwendung eines mechanischen Anschlagelements mit mindestens einem Anschlag sieht vor, daß das Anschlagelement ein Dämpfungselement umfaßt. Dieses Dämpfungselement bietet eine weitere Möglichkeit, die Standfestigkeit des Anschlagelements und des Anschlags zu verbessern.

Darüber hinaus sieht eine weitere vorteilhafte Ausführungsform der erfindungsgemäßen Lösung mit mechanischem Anschlagelement und Anschlag vor, daß das Anschlagelement einen deformierbaren Außenmantel umfaßt. Dieser deformierbare Außenmantel erlaubt durch die Deformation eine Reduktion der beim Anschlagen des Anschlagelements gegen den Anschlag auftretenden Kräfte.

Ein besonders bevorzugtes Ausführungsbeispiel einer erfindungsgemäßen Lösung sieht vor, daß das Anschlagelement eine Außenquerschnittsform aufweist, welche einer Innenquerschnittsform des Anschlags entspricht.

Besonders zweckmäßig ist dieses Ausführungsbeispiel dann ausgeführt, wenn die konkav gekrümmte Anschlagfläche in ihrer Form auf die Außenquerschnittsform des Anschlagelements abgestimmt ist. Dies ist besonders einfach dann möglich, wenn das Anschlagelement eine zylindrische Außenquerschnittsform aufweist und die Anschlagfläche halbkreisförmig konkav gekrümmt ist, so daß beim Anschlagen des Anschlagelements gegen die Anschlagfläche dieses mit einem wesentlichen Teil seiner Umfangsfläche, beispielsweise ungefähr der Hälfte derselben, im wesentlichen flächig an der Anschlagfläche anliegt und somit die Kraft pro Fläche beim Gegenlaufen des Anschlagelements gegen die Anschlagfläche gering gehalten werden kann.

Das zuletzt beschriebene Ausführungsbeispiel ist insbesondere dann vorteilhaft, wenn das Anschlagelement einen deformierbaren Außenmantel aufweist und zusätzlich innerhalb des Außenmantels ein Dämpfungselement, so daß sich der Außenmantel beim Anlegen an die Anschlagfläche deformiert und dadurch sich vollflächig an diese Anschlagfläche anlegen kann.

In diesen Fällen ist erfindungsgemäß eine Ansteuerung des Antriebs vorgesehen, welche den Antrieb so steuert, daß dieser sich in Richtung eines der Anschlagelemente bewegt und bei Erreichen des Anschlagelements die Bewegung des Arms unterbunden ist, wobei die Ansteuerung aus Gründen der Einfachheit so konzipiert ist, daß der Antrieb den Arm weiterhin in der vorherigen Richtung beaufschlagt.

Um eine Überlastung des Antriebs in diesem Fall zu verhindern, kann eine Rutschkupplung vorgesehen sein, es ist aber auch denkbar, den Antrieb mit einer Strombegrenzung zu versehen, so daß dieser dann, wenn die Bewegung des Arms durch das mechanische Anschlagelement blockiert ist, nicht beschädigt wird.

Vorzugsweise ist in diesem Fall die Nachweisschaltung so aufgebaut, daß ein Zeitgeber die Ansteuerung des Antriebs während einer vorwählbaren Zeit, die vorzugsweise größer ist als die Zeit, die der Sensor von der Ausgangsstellung zur Endstellung benötigen wird, schaltet, um beispielsweise den Sensor von der Ausgangsstellung zur Endstellung zu bewegen.

Vorzugsweise wird nach Ablauf dieser Zeit die Ansteuerung wieder umgeschaltet, so daß der Antrieb den Sensor von der Endstellung zur Ausgangsstellung bewegt und diesen beispielsweise in der Ausgangsstellung dadurch hält, daß die Ansteuerung den Antrieb weiter in Rückwärtsrichtung ansteuert und somit den Arm gegen das die Ausgangsstellung festlegende mechanische Anschlagelement angelegt hält.

Alternativ zu einer Festlegung der Ausgangsstellung und der Endstellung mittels mechanischer Anschlagelemente sieht ein weiteres bevorzugtes Ausführungsbeispiel der erfindungsgemäßen Lösung vor, daß die Ausgangsstellung und/oder die Endstellung über eine Ansteuerung des Antriebs einstellbar sind. Damit entfallen die mechanisch zu verstellenden Anschläge und es kann über die Ansteuerung des Antriebsmotors, die Teil der Nachweisschaltung sein kann, die Ausgangsstellung und die Endstellung vorgegeben werden. Vorzugsweise ist die Ansteuerung dabei so ausgebildet, daß mit dieser ein Drehwinkel eines Antriebsmotors vorgebbar ist.

Eine besonders bevorzugte konstruktive Lösung sieht dabei vor, daß die Ansteuerung einen Servoverstärker umfaßt, welcher den Antriebsmotor in eine über den Servoverstärker einstellbare Ausgangsstellung und eine über diesen Servoverstärker ebenfalls einstellbare Endstellung bewegt.

Vorzugsweise lassen sich bei Verwendung eines Servoverstärkers die Endstellungen dadurch vorwählen, daß der Servoverstärker mit zwei unterschiedliche Endlagen festlegenden Pulszügen ansteuerbar ist, wobei beispielsweise die jeweiligen Endlagen durch die Pulsformen der jeweiligen Pulszüge mittels Pulsformgliedern festlegbar sind.

Alternativ dazu lassen sich diese Funktionen auch dann in einfacher Weise verwirklichen, wenn der Servoverstärker durch einen Rechner angesteuert ist, welcher die Ansteuerung des Servoverstärkers übernimmt.

Bei den bislang beschriebenen Ausführungsbeispielen wurde nicht näher darauf eingegangen, welche Bewegungen von dem Sensor durchgeführt werden. So sieht ein besonders bevorzugtes Ausführungsbeispiel vor, daß der Sensor nach der Prüfbewegung zur Ausgangsstellung zurückkehrt, so daß der Vorteil besteht, daß der Sensor nach jeder Prüfbewegung in der definierten Ausgangsstellung steht und somit die Gefahr vermieden wird, daß der Sensor durch Arbeitsbewegungen, beispielsweise des Werkzeugs oder anderer Teile, einer Werkzeugmaschine beschädigt wird oder diese stört.

Besonders einfach läßt sich die erfindungsgemäße Einrichtung insbesondere dann betreiben, wenn die Prüfbewegung von der Bewegung des Sensors auf der Bahn von der Ausgangsstellung bis zur Endstellung umfaßt ist.

Insbesondere um die Auswertung des Signals des Sensors möglichst einfach zu gestalten, ist vorgesehen, daß die Prüfbewegung in einer festgelegten Richtung auf der Bahn erfolgt.

Je nach dem, wie eine empfindliche Seite und Richtung des Sensors liegt, ist die Bahn relativ zu dem nachzuweisenden Maschinenteil angeordnet. Liegt die empfindliche Richtung des Sensors in der Ebene in welcher die Bahn verläuft oder parallel zu dieser, so schneidet die Bahnebene vorzugsweise einen nachzuweisenden Abschnitt des Maschinenteils. Liegt die empfindliche Richtung quer zu der Ebene, in der die Bahn verläuft so schneidet die Ebene das Maschinenteil nicht, sondern verläuft vorzugsweise in einem Abstand zu einem nachzuweisenden Abschnitt des Maschinenteils, wobei der Abstand in einem für ein Ansprechen des Sensors erforderlichen Abstand liegt.

Dabei ist es günstig, wenn der Sensor zur Durchführung der Prüfbewegung von der Ausgangsstellung zu der definierten Endstellung bewegbar ist. Im einfachsten Fall ist dabei vorgesehen, daß die Prüfbewegung der Bewegung auf der Bahn von der Ausgangsstellung bis zur Endstellung entspricht.

Hinsichtlich der Auswertung des Signals des Sensors sind ebenfalls die unterschiedlichsten Varianten denkbar. So könnte beispielsweise das Ausgangssignal des Sensors über den Verlauf der Prüfbewegung aufgezeichnet und später angezeigt werden. Besonders einfach und für die erfindungsgemäße Aufgabe völlig ausreichend ist es jedoch, wenn die Nachweisschaltung bei einem ein Maschinenteil anzeigenden Ausgangssignal des Sensors während der Prüfbewegung ein Gut-Signal als Prüfsignal abgibt, das heißt, daß die Nachweisschaltung so aufgebaut ist, daß lediglich ermittelt wird, ob während des Verlaufs der Prüfbewegung einmal ein ein Maschinenteil anzeigendes Ausgangssignal des Sensors auftritt und bei einem einmaligen Auftreten dann von der Nachweisschaltung ein Gut-Signal als Prüfsignal abgegeben wird.

Ergänzend dazu ist insbesondere vorgesehen, daß die Nachweisschaltung bei Nichtvorliegen eines ein Maschinenteil anzeigenden Ausgangssignal des Sensors während der Prüfbewegung ein Nicht-Gut-Signal als Prüfsignal abgibt.

Um zusätzlich noch eine Prüfung des Sensors auf Störungen desselben durchzuführen, ist vorteilhafterweise vorgesehen, daß vor Beginn der Prüfbewegung eine Überprüfung des Ausgangssignals des Sensors zur Störungsprüfung erfolgt. Eine derartige Prüfung des Sensors ist deshalb von Vorteil, da dieser in seiner Ausgangsstellung in den Zeiten zwischen welchen er eine Überprüfung des Maschinenteils vornimmt, Verschmutzungen, beispielsweise durch Späne oder andere Materialien, unterliegt und eine derartige Verschmutzung dann dazu führen würde, daß der Sensor auf jeden Fall ein Maschinenteil während der Prüfbewegung anzeigt, unabhängig, ob dies der Fall ist oder nicht.

Im einfachsten Fall erfolgt die Überprüfung des Sensors dadurch, daß das Ausgangssignal des Sensors registriert wird, wobei insbesondere die Störungsprüfung eine Überprüfung des Sensors dahingehend umfaßt, ob dieser ein ein Maschinenteil anzeigendes oder kein ein Maschinenteil anzeigendes Signal vor Beginn der Prüfbewegung abgibt.

Die Störungsprüfung ist insbesondere dann vorteilhaft, wenn bei dieser bei einem ein Maschinenteil anzeigenden Ausgangssignal des Sensors eine Störungsmeldung erfolgt. Dadurch kann mittels der Störungsprüfung, beispielsweise bei Werkzeugmaschinen, vermieden werden, daß eine Falschanzeige des Sensors, ausgelöst durch eine Verschmutzung des Sensors mittels Spänen, und somit eine irrtümliche Anzeige eines Maschinenteils erfolgt.

Hinsichtlich der vom Sensor durchlaufenden Bahn wurden bislang keine näheren Ausführungen gemacht. So sieht ein Ausführungsbeispiel vor, daß die Bahn des Sensors quer zu einer Längsachse des Maschinenteils verläuft. Insbesondere vorteilhaft ist es dabei, wenn die Bahn in einer Ebene quer zur Längsachse des Maschinenteils liegt.

Bezüglich der Art der Führung des Sensors auf dieser Bahn wurden bislang keine näheren Angaben gemacht. So sieht ein bevorzugtes Ausführungsbeispiel vor, daß der Sensor an einem von dem Antrieb bewegten Arm gehalten ist. Um den Sensor dabei auf der Bahn zu bewegen, ist der Arm zweckmäßigerweise an einer Bahnführung gelagert.

Um darüber hinaus ein Ansprechen des Sensors auf das Maschinenteil in seiner definierten Position in einfacher Weise einstellen zu können, ist zweckmäßigerweise vorgesehen, daß der Arm längenverstellbar ist.

Ein weiteres bevorzugtes Ausführungsbeispiel sieht vor, daß der Arm durch eine lösbare Verbindung an der Bahnführung gehalten ist. Dadurch ist die Möglichkeit geschaffen, den Arm rasch von der Bahnführung zu lösen und beispielsweise den Arm mitsamt dem vom Arm getragenen Sensor auszuwechseln.

Besonders vorteilhaft ist es dabei, wenn der Arm mit einer schnelllösbaren Verbindung an der Bahnführung auswechselbar gehalten ist, so daß ein schnelles Auswechseln des Armes möglich ist.

Im Falle eines Ausführungsbeispiels, bei welchem der Arm durch die lösbare Verbindung an der Bahnführung gehalten ist, ist es besonders vorteilhaft, wenn die lösbare Verbindung zur Weiterführung von Leitungen zum Sensor eine elektrische Steckverbindung umfaßt, so daß die im Arm entlanggeführten elektrischen Leitungen in einfacher Weise mit in der Bahnführung weiterverlaufenden elektrischen Leitungen zur Abfrage und Ansteuerung des Sensors verbindbar sind. Ein besonders vorteilhaftes Ausführungsbeispiel sieht vor, daß der Arm aus unterschiedlichen Armstücken aufbaubar ist. In diesem Fall wird die Idee des mit einer lösbaren Verbindung an der Bahnführung gehaltenen Arms konsequent dadurch weitergeführt, daß der Arm aus auswechselbaren, unterschiedlich langen Armstücken aufbaubar ist und somit unterschiedliche Armlängen in einfacher Weise herstellbar sind. In gleicher Weise ist es aber auch denkbar, auswechselbare unterschiedliche geometrische Formen des Armes einzusetzen.

Als schnelllösbare Verbindungen sind alle Arten von Verbindungen wie Schraubverbindungen, Steckverbindungen oder Rastverbindungen denkbar.

Die Bahnführung selbst kann auf unterschiedlichste Art und Weise ausgebildet sein. Eine Möglichkeit sieht dabei vor, daß die Bahnführung eine Schwenklagerung ist, so daß vorzugsweise die Bahn des Sensors eine Kreisbahn ist, deren Radius bei einem längenverstellbaren Arm ebenfalls einstellbar ist.

Alternativ dazu ist es aber auch denkbar, daß die Bahnführung eine Linearlagerung ist, so daß die Bahn des Sensors eine geradlinige Bahn ist.

Hinsichtlich der Verbindung des auf der Bahn bewegten Sensors mit der Nachweisschaltung sind die unterschiedlichsten Möglichkeiten denkbar, so sieht eine Möglichkeit an der Bahnführung oder an dem Arm Übertragungselemente vor, mit welchen eine Informationsübertragung zwischen dem Sensor und der Nachweisschaltung erfolgt.

Diese Übertragungselemente können im einfachsten Fall Schleifkontakte sein. Es ist aber auch denkbar, beispielsweise die Übertragungselemente als induktive Übertragungselemente auszubilden.

Des weiteren wurden bei den bislang beschriebenen Ausführungsbeispielen keine näheren Angaben über die Art des Sensors gemacht.

Eine bevorzugte Möglichkeit sieht dabei die Ausbildung des Sensors als einen induktiven Sensor vor, da dieser insbesondere bei Werkzeugmaschinen den Vorteil hat, daß er durch Kühlmittel und Öl, welches im Bereich von Maschinenteilen stets auftritt, nicht verschmutzt. Insbesondere erlaubt ein derartiger Sensor die Überprüfung eines Werkzeugs in seiner definierten Position auch bei laufendem Werkzeug und auch bei Besprühen des Werkzeugs mit Kühlflüssigkeit und Öl, so daß weder die Bewegung des Werkzeugs noch die Kühlmittelzufuhr zu diesem unterbrochen werden müssen.

Alternativ dazu ist es aber auch denkbar, den Sensor als kapazitives Meßsystem auszubilden.

Schließlich sieht eine weitere Alternative vor, daß der Sensor ein optisches Meßsystem sein kann, wobei ein derartiges optisches Meßsystem nicht auf Metallteile beschränkt ist und somit auch den Nachweis von nichtmetallischen Maschinenteilen in einer definierten Position in einfacher Weise ermöglicht.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:

Fig. 1   eine schematische Darstellung des Einsatzes eines ersten Ausführungsbeispiels einer erfindungsgemäßen Einrichtung bei einer Werkzeugschiene;

Fig. 2   eine ausschnittsweise Darstellung einer Draufsicht in Richtung des Pfeils A in Fig. 1;

Fig. 3   einen Schnitt längs Linie 3-3 in Fig. 1;

Fig. 4   ein erstes Ausführungsbeispiel einer Nachweisschaltung für das erste Ausführungsbeispiel der erfindungsgemäßen Einrichtung in Fig. 1 bis 3;

Fig. 5   ein zweites Ausführungsbeispiel der Nachweisschaltung;

Fig. 6   ein drittes Ausführungsbeispiel der Nachweisschaltung;

Fig. 7   einen Längsschnitt in einer Mittelebene eines zweiten Ausführungsbeispiels einer erfindungsgemäßen Einrichtung;

Fig. 8   einen Längsschnitt in einer zur Mittelebene in Fig. 7 parallelen Seitenebene des zweiten Ausführungsbeispiels in Fig. 7;

Fig. 9   eine perspektivische Darstellung eines dritten Ausführungsbeispiels der erfindungsgemäßen Einrichtung mit geöffnetem Gehäuse und

Fig. 10  einen Schnitt längs Linie 10-10 in Fig. 9.

Ein erstes Ausführungsbeispiel einer erfindungsgemäßen Einrichtung, als Ganzes mit 10 bezeichnet, ist beispielhaft auf einer Werkzeugmaschine 12 montiert und dient zur Überwachung eines ein Maschinenteil darstellenden Bohrwerkzeugs 14, mit welchem beispielsweise eine Bohrung 16 in ein Werkstück 18 einbringbar ist.

Dieses Bohrwerkzeug 14 ist an einem Revolverkopf 20 gehalten, welcher in Richtung einer Längsachse 22 des Bohrwerkzeugs 14 relativ zu einem Maschinengestell 24 auf das Werkstück 18 zu und wieder zurückbewegbar ist. Nach Einbringen der Bohrung 16 wird der Revolverkopf 20 dabei stets in eine Anfangsstellung auf dem Maschinengestell 24 zurückgefahren, so daß das Bohrwerkzeug 14 relativ zum Maschinengestell 24 und somit auch relativ zu der fest auf dem Maschinengestell 24 montierten Einrichtung 10 in einer definierten Position steht.

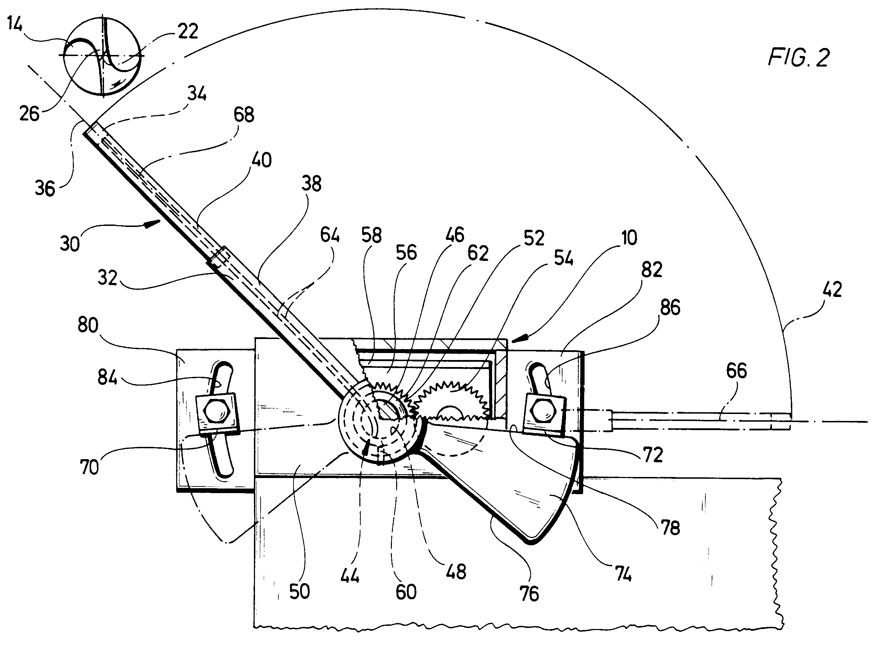

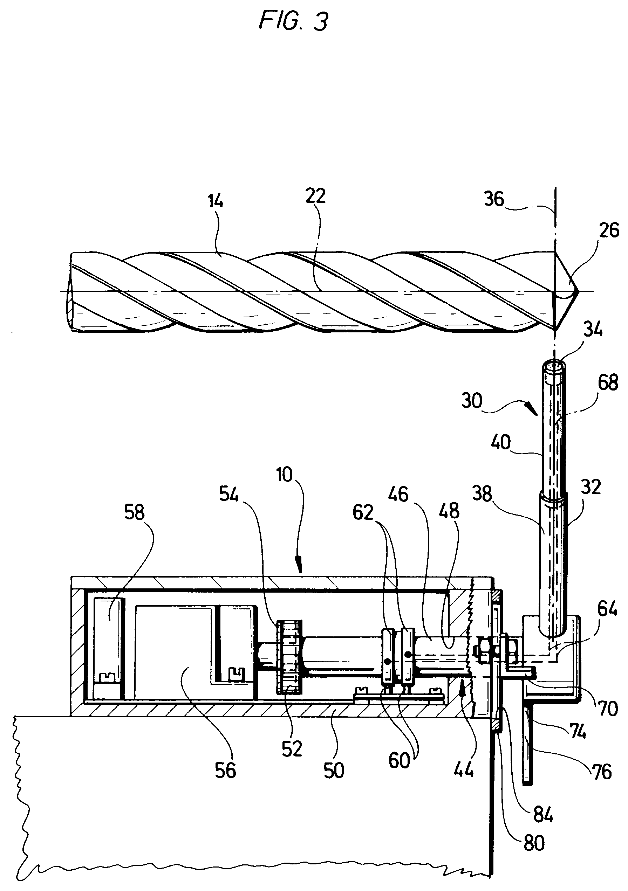

Erfindungsgemäß dient die Einrichtung 10 dazu, wie in Fig. 2 und 3 dargestellt, das Vorhandensein einer Spitze 26 des Bohrwerkzeugs 14 in einer definierten Position zu überprüfen, um nach jedem Bohrvorgang festzustellen, ob das Bohrwerkzeug 14 eventuell abgebrochen ist oder ob das Bohrwerkzeug 14 nach dem Bohrvorgang unbeschädigt ist. Entsprechend dem Ergebnis dieser Überprüfung wird dann ein Prüfsignal vorzugsweise an eine Steuerung 28 der Werkzeugmaschine 12 abgegeben, wobei das Prüfsignal dann, wenn es ein Gut-Signal ist, der Steuerung 28 erlaubt, die Werkzeugmaschine 12 weiterzubetreiben, während das Prüfsignal dann, wenn es sich um ein Nicht-Gut-Signal handelt, die Steuerung 28 beispielsweise veranlaßt, die weitere Bearbeitung zu unterbrechen.

Zur Überprüfung des Vorhandenseins der Spitze 26 am Bohrwerkzeug 14 nach jedem Bearbeitungsvorgang weist die erfindungsgemäße Einrichtung 10 ein Prüfelement 30 auf, welches einen Teleskoparm 32 und einen vorne im Teleskoparm angeordneten Sensor 34 umfaßt, welcher ein berührungsloser Sensor ist, der in Verlängerung einer Längsachse 36 des Arms 32 das Vorhandensein des Maschinenteils detektiert. In dem hier dargestellten Fall handelt es sich bei dem Sensor 34 um einen induktiven Sensor.

Der Teleskoparm 32 ist so ausgebildet, daß er ein inneres Teleskoprohr 38 und ein äußeres Teleskoprohr 40 aufweist, wobei das äußere Teleskoprohr 40 in das innere Teleskoprohr 38 einschiebbar und relativ zu diesem durch Reibschluß festlegbar ist. Dadurch läßt sich der Arm 32 in seiner Länge justieren, so daß die relative Position des Sensors 34 in seiner der Spitze 26 nächstliegenden Position einstellbar ist und somit auch eine Einstellung des Ansprechens des Sensors möglich ist.

Um wie in Fig. 2 dargestellt, den Sensor 34 auf einem Segment einer Kreisbahn 42 zu bewegen, ist der Arm 32 an einer Schwenklagerung 44 gelagert, welche eine Schwenkwelle 46 und eine diese aufnehmende Lagerbohrung 48 in einem Gehäuse 50 der Einrichtung 10 aufweist, wobei an der Schwenkwelle 46 auf einer Seite der Lagerbohrung 48 der Arm 32 gehalten ist und auf einer anderen Seite ein Ritzel 52, welches mit einem Antriebsritzel 54 eines Antriebsmotors 56 in Eingriff ist. Der Antriebsmotor 56 ist seinerseits ebenfalls in dem Gehäuse 50 gelagert.

Zur Ansteuerung des Sensors 34 und zur Auswertung der von dem Sensor 34 abgegebenen Ausgangssignale ist eine als Ganzes mit 58 bezeichnete Nachweisschaltung vorgesehen, welche über am Gehäuse 50 angeordnete Schleifkontakte 60, die ihrerseits Schleifringe 62 auf der Schwenkwelle 46 beaufschlagen, und von den Schleifringen 62 zu dem Sensor 34 führenden Leitungen 64 verbunden ist. Vorzugsweise sind die Schleifringe 62 dabei zwischen der Lagerbohrung 48 und dem Ritzel 52 auf der Schwenkwelle 46 angeordnet.

Durch eine Ansteuerung des Antriebsmotors 56 ist es somit möglich, den Sensor 34 auf der Kreisbahn 42 zu bewegen. Um dabei keine unnötigen Wege mit dem Sensor 34 zu durchlaufen und insbesondere diesen auch nicht an eventuell störenden Maschinenteilen vorbeiführen zu müssen, erfolgt die Bewegung des Sensors 34 erfindungsgemäß von einer Ausgangsstellung 66 zu einer Endstellung 68 und wieder zurück zur Ausgangsstellung 66.

Zur Festlegung der Ausgangsstellung 66 und der Endstellung 68 sind bei dem ersten Ausführungsbeispiel der erfindungsgemäßen Einrichtung 10 zwei mechanische Anschläge 70 und 72 vorgesehen, welche an dem Gehäuse 50 gehalten sind und mit einer ebenfalls an der Schwenkwelle 46 gehaltenen Sektorenscheibe 74 zusammenwirken, die mit einer ersten Seitenkante 76 an dem Anschlag 70 in der Ausgangsstellung 66 zur Anlage kommt und mit einer zweiten Seitenkante 78 an dem Anschlag 72 in der Endstellung 68.

Um die Anschläge 70 und 72 verstellbar am Gehäuse 50 zu halten, ist dieses jeweils mit Halteplatten 80 und 82 versehen, die Schlitze 84 und 86 aufweisen, in welche die Anschläge 70 und 72 eingreifen und in welchen die Anschläge 70 und 72 fixierbar sind.

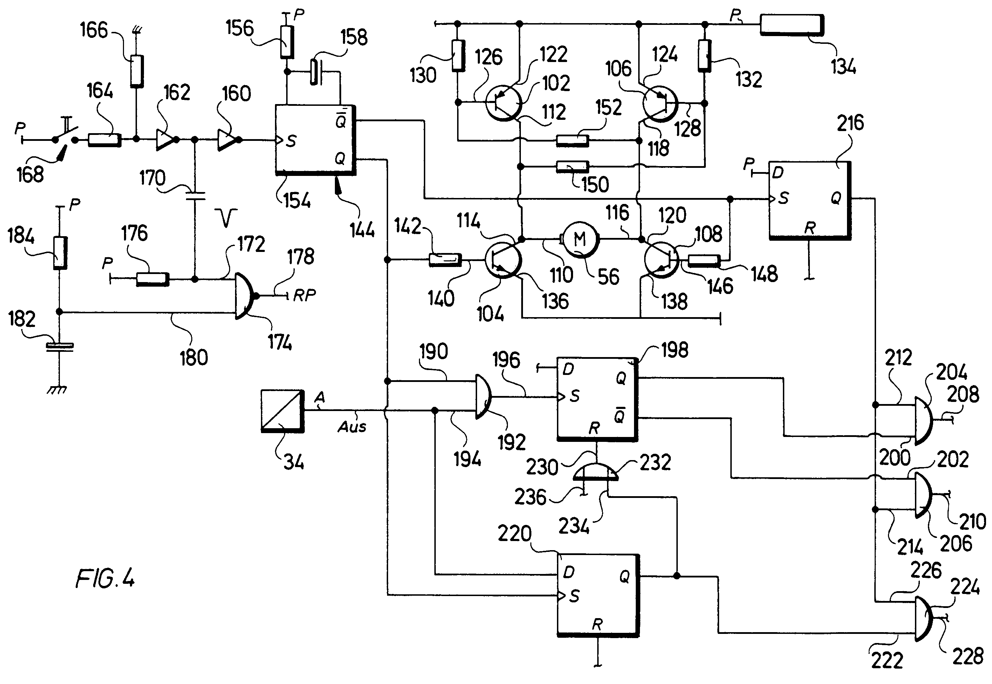

Ein erstes Ausführungsbeispiel der erfindungsgemäßen Nachweisschaltung ist in Fig 4 dargestellt.

Als Antriebsmotor 56 findet ein Gleichstrommotor Verwendung, welcher über eine Brückenschaltung angesteuert ist, die 4 Transistoren 102, 104, 106 und 108 umfaßt.

Die Transistoren 102 und 106 sind PNP-Transistoren, die Transistoren 104 und 108 NPN-Transistoren. Der eine Motoranschluß 110 ist mit den Kollektoren 112 und 114 der Transistoren 102 bzw. 104, der zweite Motoranschluß 116 mit den Kollektoren 118 und 120 der Transistoren 106 bzw. 108 verbunden. Die Emitter 122 und 124 der Transistoren 102 bzw. 106 sind unmittelbar, die Basisanschlüsse 126 und 128 der Transistoren 102 bzw. 106 über Basisspannungsteilerwiderstände 130 bzw. 132 mit einem Punkt P verbunden, der mit dem Ausgang einer an sich bekannten und in der Zeichnung daher nur schematisch dargestellten stabilisierten Gleichspannungsquelle mit Strombegrenzer 134, die eine Speisespannung liefert, in Verbindung steht.

Die Emitter 136 und 138 der Transistoren 104 und 108 sind an Masse gelegt, der Basisanschluß 140 des Transistors 104 steht über einen Basiswiderstand 142 mit einem Ausgang Q eines Zeitglieds 144, der Basisanschluß 146 des Transistors 108 nur über einen Basiswiderstand 148 mit einem Ausgang $\overline{Q}$ des Zeitglieds 144 in Verbindung. Schließlich sind in dieser Brückenschaltung noch die Kollektoren 112 und 118 der Transistoren 102 bzw. 106 über einen Basiswiderstand 150 bzw. 152 mit dem Basisanschluß 128 bzw. 126 des jeweils anderen Transistors 106 bzw. 102 verbunden.

Das Zeitglied 144 ist aufgebaut durch ein FLIP-FLOP 154 mit den Ausgängen Q und Q und mit einem RC-Glied, umfassend einen Widerstand 156 und einen Kondensator 158, beschaltet, mit welchem der Zeitablauf einstellbar ist, wobei der Widerstand 156 einerseits auf dem Potential P liegt. Das Zeitglied 144 läßt sich starten über einen Steuereingang S des FLIP-FLOP's 154, der mit dem Ausgang eines Inverters 160 verbunden ist, dessen Eingang seinerseits wiederum am Ausgang eines Inverters 162 liegt. Ein Eingang des Inverters 162 liegt an Mittelabgriff eines Spannungsteilers, gebildet aus den Widerständen 164 und 166, wobei der Widerstand 164 zwischen einem Ausgang eines Schalters 168 und dem Eingang des Inverters 162 und der Widerstand 166 zwischen dem Eingang des Inverters 162 und Masse liegt. Der Schalter 168 liegt mit seinem Eingang auf dem Potential P der Speisespannung.

Durch kurzzeitiges Schließen des Schalters läßt sich somit das Zeitglied 144 über seinen Steuereingang S starten. Bei diesem kurzzeitigen schließen des Schalters 168 entsteht außerdem am Eingang des Inverters 160 ein kurzzeitiger Spannungsabfall, welcher über einen Kondensator 170 an einen Eingang 172 eines NAND-Gatters 174 gekoppelt ist, wobei dieser Eingang über einen Widerstand 176 auf der positiven Speisespannung P liegt. Dieses NAND-Gatter 174 gibt an seinem Ausgang 178 einen Reset-Puls RP ab, dessen Auswirkungen im nachfolgenden beschrieben werden.

Ein zweiter Eingang 180 des NAND-Gatters 174 liegt an einem Mittelabgriff eines Zeitgliedes, gebildet durch einen Kondensator 182, geschaltet zwischen dem Mittelabgriff und Masse, und einem Widerstand 184 geschaltet zwischen der positiven Speisespannung P und dem Mittelabgriff. Durch dieses RC-Glied wird beim Einschalten der Nachweisschaltung 58 ebenfalls ein Reset-Puls RP über das NAND-Gatter 174 erzeugt.

Das Starten des Zeitgliedes 144 führt nun am Ausgang Q zum Vorliegen eines Signals 1 (HIGH) und am Ausgang $\overline{Q}$ zum Vorliegen eines Signals 0 (LOW), so daß der Antriebsmotor 56 aufgrund seiner Ansteuerung über die vorstehend erläuterte Brückenschaltung zu laufen beginnt und zwar von der Ausgangsstellung 66 weg in Richtung der Endstellung 68. Das Verschwenken des Sensors 34 von der Ausgangsstellung 66 zur Endstellung 68 stellt dabei eine Prüfbewegung dar, während welcher die erfindungsgemäße Einrichtung das Vorhandensein eines Maschinenteils, in diesem Fall der Spitze 26, überprüft.

Dies erfolgt mit dem ersten Ausführungsbeispiel der Nachweisschaltung 58 dadurch, daß der Ausgang Q des Zeitglieds 144, welcher bei gestartetem Zeitglied 144 das Signal 1 aufweist, an einem Eingang 190 eines als Tor wirkenden AND-Gatters 192 anliegt. Ein zweiter Ausgang 194 des AND-Gatters 192 ist dabei mit dem Sensor 34 verbunden und erfaßt ein Ausgangssignal A des Sensors 34. Das AND-Gatter 192 gibt an seinem Ausgang 196 dann ein Signal 1 ab, wenn sowohl an seinem Eingang 190 das Signal 1 anliegt als auch an seinem Eingang 194, was dann der Fall ist, wenn der Sensor 34 ein Metallteil, in diesem Fall die Spitze 26, detektiert. Das heißt, daß während der gesamten Prüfbewegung von der Ausgangsstellung 66 zur Endstellung 68 dann das Ausgangssignal A 1 ist wenn der Sensor 34 einen der Spitze 26 nächstliegenden Punkt der Kreisbahn 42 durchläuft. Vor diesem der Spitze 26 nächstliegenden Punkt und nach diesem der Spitze 26 nächstliegenden Punkt der Kreisbahn 42 ist das Ausgangssignal A des Sensors 0, so daß am Ausgang 196 des AND-Gatters 192 das Signal 0 anliegt. Der Ausgang 196 des AND-Gatters 192 ist mit einem Steuereingang S eines FLIP-FLOP's 198 verbunden, dessen Eingang D auf positiver Speisespannung P liegt und dessen Ausgänge Q und $\overline{Q}$ ihrerseits mit den Eingängen 200 und 202 zweier AND-Gatter 204 und 206 verbunden sind. Liegt an dem Steuereingang S des FLIP-FLOP's 198 das Signal 1 an, so schaltet dieses so, daß am Ausgang Q desselben das Signal 1 und am Ausgang $\overline{Q}$ desselben das Signal 0 anliegt.

Passiert nun während der Prüfbewegung der Sensor 34 den der Spitze 26 nächstliegenden Punkt der Kreisbahn 42, so schaltet das FLIP-FLOP 198 seinen Ausgang Q auf Signal 1 und seinen Ausgang $\overline{Q}$ auf das Signal 0. Das an den Ausgängen 208 und 210 der AND-Gatter 204 und 206 anliegende Signal hängt nun davon ab, wie die zweiten Eingänge 212 und 214 der AND-Gatter 204 und 206 angesteuert sind. Deren Ansteuerung erfolgt über den Ausgang Q eines FLIP-FLOP's 216, welches mit seinem Steuereingang S mit dem Ausgang $\overline{Q}$ des FLIP-FLOP's 154 verbunden ist und mit seinem Eingang D auf der positiven Speisespannung P liegt. Der Ausgang Q des FLIP-FLOP's 16 ist so lange 0, solange der Ausgang $\overline{Q}$ des FLIP-FLOP's 154 ebenfalls 0 ist, das heißt also solange der Sensor 34 von der Ausgangsstellung 66 zur Endstellung 68 geschwenkt wird.

Nach Ablauf der am Zeitglied 144 eingestellten Zeit schaltet dieses um und gibt an seinem Ausgang Q das Signal 0 und seinem Ausgang $\overline{Q}$ das Signal 1 ab, was dazu führt, daß der Motor 56 zurückläuft und somit der Sensor 34 von der Endstellung 68 zur Ausgangsstellung 66 zurückbewegt wird. Vorzugsweise ist dabei die Zeit des Zeitglieds 144 so gewählt, daß sie mindestens der Zeit entspricht, die der Sensor benötigt, um von der Ausgangsstellung 66 zu der Endstellung 68 zu gelangen. Sofern die Zeit größer ist, wird die Schwenkbewegung des Arms 32 durch den Anschlag 72 in der Endstellung begrenzt, und der Motor 56 dadurch angehalten, was insofern unschädlich ist, als der Strom über die den Strombegrenzer in der Gleichspannungsquelle 134 begrenzt ist.

Sobald nun an dem Ausgang $\overline{Q}$ des FLIP-FLOP's 154 das Signal 1 anliegt, liegt auch am Ausgang Q des FLIP-FLOP'S 216 das Signal 1, so daß an den Ausgängen 208 und 210 der AND-Gatter 204 und 206 dann das den Ausgängen Q und $\overline{Q}$ des FLIP-FLOP's 198 das entsprechende Signal anliegt. Wurde im Laufe der Prüfbewegung die Spitze 26 vom Sensor 34 erfaßt, so liegt an dem Ausgang 208 das Signal 1 an, während an dem Ausgang 210 das Signal 0 anliegt, wobei ein Signal 1 am Ausgang 208 ein Gut-Signal bedeutet. Wurde die Spitze 26 im Verlauf der Prüfbewegung nicht erfaßt, so liegt am Ausgang $\overline{Q}$ des FLIP-FLOP's 198 das Signal 1 und am Ausgang Q das Signal 0, so daß letztlich am Ausgang 210 des AND-Gatters das Signal 1 und am Ausgang 208 das Signal 0 anliegt, wobei ein Signal 1 am Ausgang 210 ein Nicht-Gut-Signal bedeutet.

Da während des Rücklaufs am Ausgang Q des FLIP-FLOP's 154 das Signal 0 anliegt, wird während des Rücklaufs das AND-Gatter 192 gesperrt, so daß dieses nicht mehr das Ausgangssignal A des Sensors 34 an den Steuereingang S des FLIP-FLOP's 198 weitergibt.

Um zusätzlich noch die Möglichkeit zu schaffen, eine Störung des Sensors vor der Prüfbewegung zu erkennen, ist das FLIP-FLOP 220 vorgesehen, dessen Steuereingang S ebenfalls mit dem Ausgang Q des FLIP-FLOP's 154 verbunden ist und dessen Eingang D mit dem zweiten Eingang 194 des AND-Gatters 192 verbunden ist. Ein Ausgang Q des FLIP-FLOP's 220 ist mit einem ersten Eingang 222 eines AND-Gatters 224 verbunden, dessen zweiter Eingang 226 ebenfalls mit dem Ausgang Q des FLIP-FLOP's 216 verbunden ist.

Durch das FLIP-FLOP 220 wird erfaßt, ob unmittelbar nach Schließen des Schalters 168 bereits der Sensor 34 ein Ausgangssignal A abgibt das 1 ist. Dies würde bedeuten, daß der Sensor bereits in der Ausgangsstellung ein Teil erkennt. Dies kann beispielsweise dann der Fall sein, wenn der Sensor 34 durch Späne, die beispielsweise bei einem Bearbeitungsvorgang entstehen, verschmutzt ist und somit irrtümlicherweise das dem Vorhandensein der Spitze 26 entsprechende Ausgangssignal A abgibt.

Liegt also bereits unmittelbar nach Schließen des Schalters 168 das Ausgangssignal A des Sensors 34 auf 1, so führt dies dazu, daß das FLIP-FLOP 220 an seinem Ausgang Q das Signal 1 abgibt und hält. Dieses Ausgangssignal 1 führt am Eingang 222 des AND-Gatters 224 solange nicht zu einem eine Störung anzeigenden Signal 1 am Ausgang 228 desselben, bis die Prüfbewegung beendet ist und am Eingang 226 des AND-Gatters 224 durch den Ausgang O des FLIP-FLOP's 216 das Signal 1 anliegt. Ist die Prüfbewegung beendet, so wird jedoch das die Störung anzeigende Signal in Form eines Signals 1 am Ausgang 228 angezeigt. Um zu verhindern, daß trotzdem das FLIP-FLOP 198 in den Zustand schaltet, in welchem der Ausgang Q das Signal 1 und der Ausgang $\overline{Q}$ das Signal 0 abgibt, ist ein Reset-Eingang R des FLIP-FLOP's 198 mit einem Ausgang 230 eines OR-Gatters 232 verbunden, dessen einer Eingang 234 mit dem Ausgang Q des FLIP-FLOP's 220 verbunden ist. Sobald nun am Ausgang Q des FLIP-FLOP's 220 das Signal 1 anliegt, liegt am Reset-Eingang R des FLIP-FLOP's 198 ebenfalls das Signal 1 an, so daß dieses in der Stellung gehalten wird, in welcher an seinem Ausgang $\overline{Q}$ das Signal 1 und seinem Ausgang Q das Signal 0 anliegt. Der zweite Eingang 236 des OR-Gatters 232 sowie ein Reset-Eingang R des FLIP-FLOP's 220 und ein Reset-Eingang R des FLIP-FLOP's 216 sind mit dem Ausgang 178 des NAND-Gatters 174 verbunden, und empfangen alle das Reset-Signal RP unmittelbar nach Schließen des Schalters 168. Dieses Reset-Signal führt sowohl im FLIP-FLOP 198 als auch im FLIP-FLOP 216 und im FLIP-FLOP 220 dazu, daß diese in den Zustand zurückgesetzt werden, in welchem an deren Ausgang Q das Signal O und deren Ausgang $\overline{Q}$ das Signal 1 anliegt, so daß vor jeder Prüfbewegung des Sensors 34 in diesen FLIP-FLOP's derselbe Ausgangszustand gesetzt wird und diese entsprechend der vorstehenden Beschreibung funktionieren.

Zusammenfassend funktioniert somit das in Fig. 4 dargestellte erste Ausführungsbeispiel der Nachweisschaltung so, daß vor Beginn der Prüfbewegung ermittelt wird, ob der Sensor 34 bereits irrtümlicherweise ein Maschinenteil anzeigt, dieses aber erst nach Beendigung der Prüfbewegung von der Nachweisschaltung 58 durch ein Signal 1 am Ausgang 228 gemeldet wird. Liegt eine Störung nicht vor, so wird während der Prüfbewegung ermittelt, ob der Sensor 34 die Spitze 26 detektiert und bejahendenfalls nach Beendigung der Prüfbewegung am Ausgang 208 das Signal 1 angelegt, welches ein Gut-Signal bedeutet, oder verneinendenfalls am Ausgang 110 das Signal 1 angelegt, welches ein Nicht-Gut-Signal bedeutet.

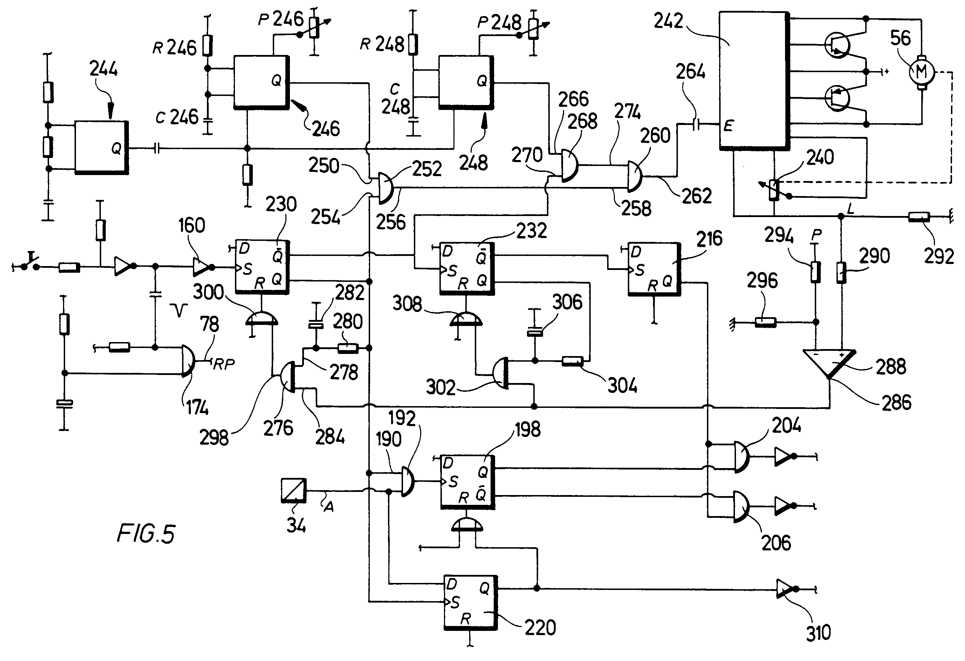

Bei einem zweiten Ausführungsbeispiel der erfindungsgemäßen Nachweisschaltung 58, dargestellt in Fig. 5, sind diejenigen Schaltungselemente, die mit denen des ersten Ausführungsbeispiels identisch sind, mit denselben Bezugzeichen versehen, so daß diesbezüglich auf die Ausführungen zur Schaltung und Funktion derselben im Zusammenhang mit den ersten Ausführungsbeispiel verwiesen werden kann.

Im Gegensatz zu dem ersten Ausführungsbeispiel der Nachweisschaltung 58 in Fig. 4 ist beim zweiten Ausführungsbeispiel in Fig. 5 das Zeitglied 144 nicht notwendig, sondern der Ausgang des Inverters 160 ist mit dem Steuereingang S eines FLIP-FLOP's 230 verbunden, dessen Ausgang $\overline{Q}$ mit dem Steuereingang S eines FLIP-FLOP's 232 verbunden ist, während dessen Ausgang Q mit dem Eingang 190 des AND-Gatters 192 verbunden ist. Der Ausgang $\overline{Q}$ des FLIP-FLOP's 232 ist wiederum seinerseits mit dem Steuereingang S des bekannten FLIP-FLOP's 216 verbunden, welches am Ende der Prüfbewegung die AND-Gatter 204 und 206 ansteuert.

Bei dem zweiten Ausführungsbeispiel der Nachweisschaltung 58 in Fig. 5 sind die mechanischen Anschläge 70 und 72 nicht notwendig, sondern der Drehwinkel des Motor 56 läßt sich elektronisch festlegen, so daß auch die Ausgangsstellung 66 und die Endstellung 68 über die Nachweisschaltung 58 festlegbar sind. Hierzu dreht der Antriebsmotor 56 gleichzeitig ein Potentiometer 240, welches zusammen mit einem Servoverstärker 242 des Typs NE 544 von Valvo, der intern einen Pulsbreiten-Demulator mit Endstufe enthält, die Ansteuerung des Antriebsmotors 56 bildet. Dieser Servoverstärker 242 arbeitet nun so, daß dieser an seinem Eingang E Pulse mit einer Frequenz von 40 Hz erhält. Die Entscheidung, welche Richtung der Antriebsmotor 56 dreht hängt davon ab, wie breit die Trigger-Pulse sind. Bei einer Impulsbreite von beispielsweise 1,5 Millisekunden wird der Antriebsmotor 56 von dem Servoverstärker 242 in einer Mittelstellung eines möglichen Drehwinkels gehalten. Bei Impulsbreiten von < 1,5 Millisekunden dreht der Antriebsmotor 56 in die eine Richtung und bei Impulsbreiten von > 1,5 Millisekunden dreht der Antriebsmotor 56 in die entgegengesetzte Richtung, wobei die Größe des Drehwinkels in die beiden Richtungen von der Größe der Abweichung der Pulsbreiten von der der Mittelstellung entsprechenden Pulsbreite von 1,5 Millisekunden entspricht.

Um dies zu erreichen, ist zunächst ein Taktgenerator 244 vorgesehen, welcher die Trigger-Pulse in Abständen von 40 Millisekunden liefert. Dieser Taktgenerator 244 kann beispielsweise ein als astabiler Multivibrator geschalteter IC sein. Dieser triggert zwei als monostabile Multivibratoren geschaltete IC's 246 und 248, die beide mit Zeitgliedern R 246 und C 246 sowie R 248 und C 248 so geschaltet sind, daß bei einer Mittelstellung der mit diesen IC's verbundenen Potentiometer P 246 und P 248 an einem Ausgang Q der beiden IC's 246 und 248 Pulse mit jeweils 1,5 Millisekunden Pulsbreite auftreten.

Der Ausgang Q des IC's 246 liegt an einem Eingang 250 eines AND-Gatters 252 während ein zweiter Eingang 254 des AND-Gatters 252 mit dem Ausgang Q des FLIP-FLOP's 230 verbunden ist. Ein Ausgang 256 des AND-Gatters 252 liegt dabei an einem Eingang 258 eines OR-Gatters 260, dessen Ausgang 262 über einen Kondensator 264 mit dem Eingang E des Servoverstärkers 242 verbunden ist. Die Impulse am Ausgang Q des IC's 246 liegen dann am Eingang des Servoverstärkers 242 an, wenn am Ausgang Q des FLIP-FLOP's 230 das Signal 1 anliegt, so daß das AND-Gatter 252 als Tor durchschaltet.

In gleicher Weise liegt der Ausgang Q des IC's 248 an einem Eingang 266 eines AND-Gatters 268, während ein zweiter Eingang 270 dieses AND-Gatters 268 mit dem Ausgang $\overline{Q}$ des FLIP-FLOP's 230 verbunden ist. Ein Ausgang 272 des AND-Gatters 268 liegt dabei auf einem zweiten Eingang 274 des OR-Gatters 260. Die Pulse am Ausgang Q des IC's 248 liegen daher immer dann am Eingang E des Servoverstärkers 242 an, wenn am Ausgang $\overline{Q}$ des FLIP-FLOP's 230 das Signal 1 anliegt. Durch Verstellen des Potentiometers 246 läßt sich die Pulsbreite am Ausgang Q des IC's 246 beispielsweise zu kürzeren Pulsbreiten als 1,5 Millisekunden verändern, während durch Verstellen des Potentiometers P 248 die Pulsbreiten am Ausgang Q des IC's 248 in Richtung > Pulsbreiten als 1,5 Millisekunden verstellbar sind und somit die Ausgangsstellung 66 und die Endstellung 68 des Antriebsmotors 56 über die Potentiometer 246 und 248 vorwählbar sind.

Beispielsweise wird mit dem Potentiometer P 246 die Endstellung 68 eingestellt, so daß nach schließen des Schalters 168 und Anlegen des Signal 1 am Ausgang Q des FLIP-FLOP's 230 der Servoverstärker 242 den Antriebsmotor 56 zu der Endstellung 68 laufen läßt.

Zur Erkennung der Endstellung ist ein AND-Gatter 276 vorgesehen, dessen einer Eingang 278 über einen Widerstand 280 mit dem Ausgang Q des FLIP-FLOP's 230 verbunden ist, wobei der Eingang 278 ebenfalls über einen Kondensator 282 auf Masse liegt. Ein anderer Eingang 284 des AND-Gatters 276 ist mit dem Ausgang 286 eines Komparators 288 verbunden, der seinerseits mit seinem " + " Eingang über einen Widerstand 290 mit einem Potentialpunkt L verbunden ist. Der "-" Eingang des Komparators 288 liegt am Mittelabgriff eines Spannungsteilers, gebildet von zwei Widerständen 294 und 296, wobei der Widerstand 296 den Mittelabgriff mit Masse verbindet und der Widerstand 294 den Mittelabgriff mit der Speisespannung P, so daß der Mittelabgriff auf einem festgelegten Potential liegt.

Der Komparator 288 überwacht damit die Stromaufnahme des Servoverstärkers 242 über das Potential L. Solange der Antriebsmotor 56 nicht läuft, wird von dem Servoverstärker 242 ein geringer Strom aufgenommen, so daß der Spannungsabfall am Widerstand 292 nicht das Potential am "-" Eingang des Komparators 288 übersteigt. Damit ist der Ausgang 286 des Komparators 288 auf 0. Sobald jedoch der Antriebsmotor 56 anläuft und auf eine neue Position läuft, steigt die Stromaufnahme an, somit auch das Potential L und am Ausgang D 286 des Komparators 288 liegt das Signal 1 an. Dies würde an einem Ausgang 298 des AND-Gatters 276 zu einem Signal 1 führen, sofern am Eingang 278 desselben ebenfalls das Signal 1 anliegen würde. Dies ist jedoch unmittelbar nach Anlaufen des Antriebsmotors 56 noch nicht möglich, da durch den Widerstand 280 und den Kondensator 282 der Eingang 278 erst mit einer Zeitverzögerung das Signal 1 erreicht.

Der hohe Spannungsabfall über den Widerstand 292 findet jedoch nur über wenige Millisekunden statt und bereits vor Erreichen der Endstellung 68 kippt der Ausgang 286 des Komparators wieder auf das Signal 0 zurück.

Da der Antriebsmotor 56 nicht genau in der durch das Potentiometer P 246 festgelegten Endstellung 68 hält, sondern diese überläuft und die Lageregelung dieses Überlaufen durch ein Zurückdrehen korrigiert, tritt unmittelbar vor Erreichen der Endstellung 68 aufgrund des Einschwingens des Antriebsmotors 56 in die Endstellung wiederum ein hoher Strom über den Widerstand 292 und somit ein hoher Spannungsabfall über diesen auf, so daß der Ausgang 286 des Komparators 288 erneut auf das Signal 1 kippt. Mittlerweile hat sich jedoch auch durch die das Zeitglied 280 und 282 am Eingang 278 des AND-Gatters 276 das Signal 1 gebildet, so daß das AND-Gatter 276 an seinem Ausgang nun das Signal 1 abgibt.

Da der Ausgang 298 über ein OR-Gatter 300 mit einem Reset-Eingang R des FLIP-FLOP's 230 verbunden ist, erfolgt ein Zurücksetzen des FLIP-FLOP's 230 derart, daß an dem Ausgang Q das Signal 0 und am Ausgang Q̄ das Signal 1 anliegt.

Um in gleicher Weise auch das FLIP-FLOP 232 zurücksetzen zu können, ist ebenfalls ein AND-Gatter 302 vorgesehen, das dem AND-Gatter 276 entspricht, dem in gleicher Weise ein Zeitglied, bestehend aus dem Widerstand 304 und dem Kondensator 306, zugeordnet ist. Ferner ist ein Ausgang des AND-Gatters 302 mit einem Eingang eines OR-Gatters 308 verbunden, das dem OR-Gatter 300 entspricht und dazu dient, das FLIP-FLOP 232 über dessen Reset-Eingang R zurückzusetzen. Der Widerstand 304 ist dabei mit dem Ausgang Q des FLIP-FLOP's 232 verbunden und der Kondensator 306 mit Masse.

Das Ende des Rücklaufs wird durch die Verbindung des Ausgangs Q̄ des FLIP-FLOP's 232 mit dem Steuereingang S des FLIP-FLOP's 216 den AND-Gattern 204 und 206 gemeldet.

Ferner sind die OR-Gatter 300 und 308 mit einem weiteren Eingang mit dem Ausgang 178 des NAND-Gatters 174 verbunden, so daß auch über den Reset-Puls RP ein Reset der FLIP-FLOP's 230 und 232 erfolgen kann.

Im übrigen erfolgt bei dem zweiten Ausführungsbeispiel gemäß Fig. 5 die Überwachung des Sensors 34 und die Aufzeichnung des Ausgangssignals A desselben in gleicher Weise wie beim ersten Ausführungsbeispiel der Nachweisschaltung 58.

Der einzige Unterschied besteht in der Meldung einer Störung durch das FLIP-FLOP 220, wobei im Fall des zweiten Ausführungsbeispiels der Nachweisschaltung gemäß Fig. 5 das Signal am Ausgang Q des FLIP-FLOP's 220 über einen Inverter 310 weitergegeben wird.

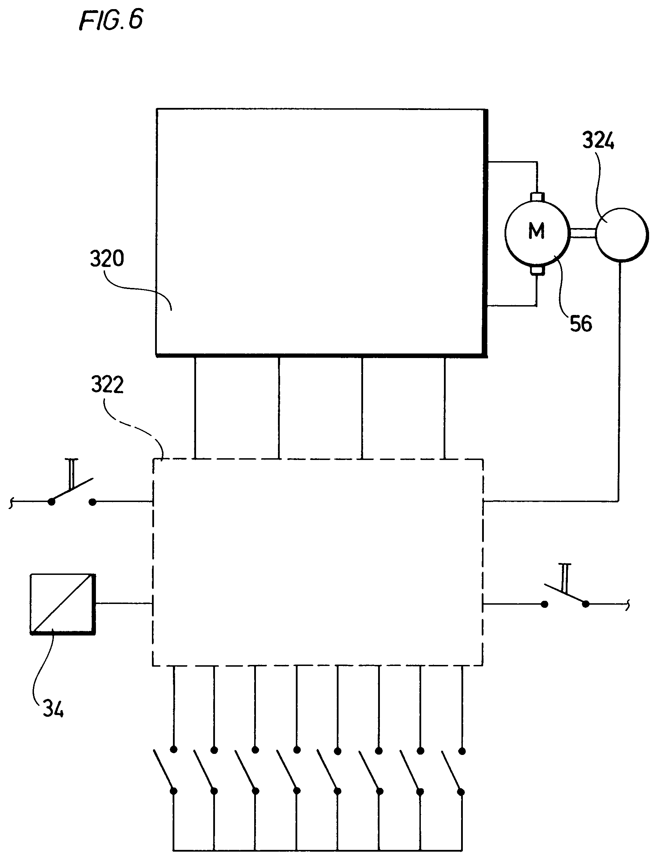

Bei einem dritten Ausführungsbeispiel einer erfindungsgemäßen Nachweisschaltung 58, dargestellt in Fig. 6 wird der Antriebsmotor 56 ebenfalls über einen Servoverstärker 320 angesteuert, der seinerseits von einem Mikroprozessor 322 überwacht wird, wobei der Mikroprozessor 322 das Ausgangssignal A des Sensors 34 einliest und durch den Schalter 168 für die jeweilige Prüfbewegung gestartet wird.

Auch mit dem Mikroprozessor 322 besteht die Möglichkeit, ohne mechanische Anschläge die Anschlagstellungen 66 und 68 festzulegen, wobei hierzu mit dem Antriebsmotor 56 ein Pulsgeber 324 gekoppelt ist, dessen Pulse der Mikroprozessor 322 erfaßt.

Auch bei dem dritten Ausführungsbeispiel der Nachweisschaltung 58 gemäß Fig. 6 können die Ausgangsstellung 66 und die Endstellung 68 ohne mechanische Anschläge beliebig festgelegt werden.

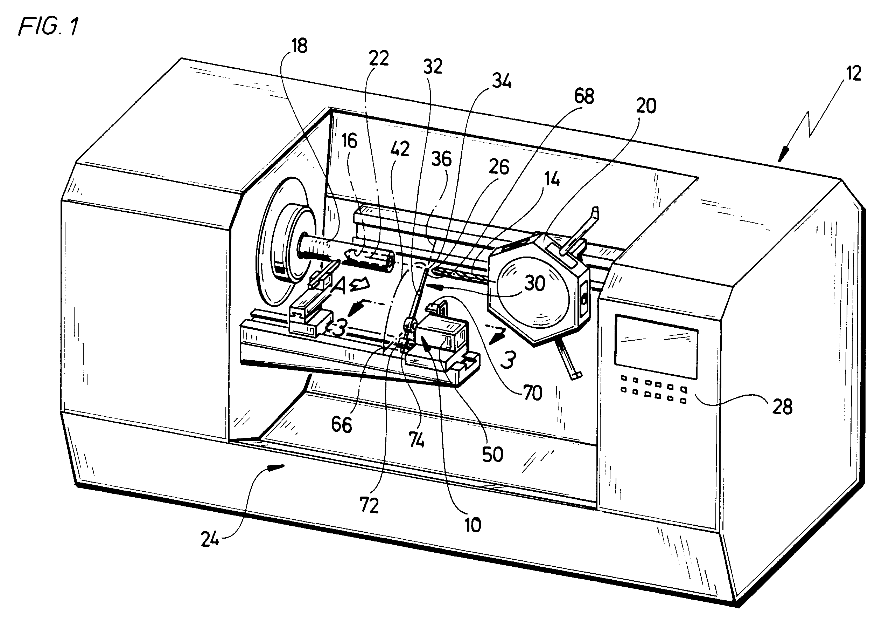

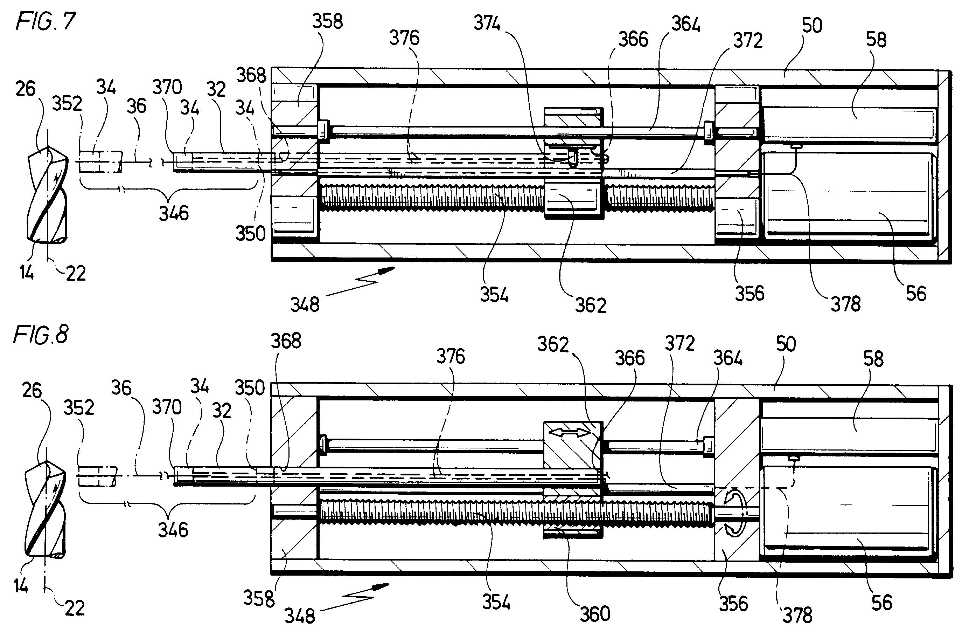

Ein zweites Ausführungsbeispiel einer erfindungsgemäßen Einrichtung, dargestellt in Fig. 7 ist insoweit, als die gleichen Teile wie beim ersten Ausführungsbeispiel, dargestellt in den Figuren 1 bis 3, Verwendung finden, mit denselben Bezugszeichen versehen. So ist auch bei dem zweiten Ausführungsbeispiel der Sensor 34 an einem vorderen Ende des Arms 32 angeordnet, welcher durch einen Antriebsmotor 56 bewegbar ist.

Im Gegensatz zum ersten Ausführungsbeispiel wird allerdings der Arm 32 nicht verschwenkt, sondern in Richtung seiner Längsachse 36 auf die Spitze 26 des Werkzeugs 14 zubewegt, wobei die Längsachse 36 in beliebiger Richtung zur Spitze 26 und auch zur Längsachse 22 des Werkzeugs 14 ausgerichtet sein kann.

Die vom Sensor 34 beschriebene Bahn 346 ist somit eine lineare Bahn von einer Ausgangsstellung 350 zu einer Endstellung 352 und wieder zurück.

Zur Verschiebung des Arms 32 ist, wie in Fig. 7 und 8 dargestellt, eine Linearverschiebeeinrichtung 348 vorgesehen, welche eine von dem Antriebsmotor getriebene Spindel 354 aufweist, welche an beiden Enden in Lagerteilen 356 und 358 drehbar gelagert ist. An dem Lagerteilen 356 ist vorzugsweise auch der Antriebsmotor 56 gehalten. Auf dieser Spindel 354 sitzt eine Spindelmutter 360, welche fest in einem Gleitstück 362 gehalten ist und zur Verschiebung desselben dient. Das Gleitstück 362 ist seinerseits an zwei nebeneinanderliegenden und sich parallel zur Spindel 354 erstreckenden Führungsstäben 364 geführt, welche sich zwischen den Lagerteilen 356 und 358 erstrecken und fest an diesen gehalten sind. Ferner ist in dem Gleitstück 362 ein hinteres Ende 366 des Arms 32 gehalten, der sich parallel zu den Führungsstäben durch eine Bohrung 368 im Lagerteil 358 hindurch erstreckt, so daß der an seinem vorderen Ende 370 gehaltene Sensor 34 auf der dem Gleitstück 362 gegenüberliegenden Seite des Lagerteils 358 bewegbar ist.

Der Arm 32 ist somit einerseits durch die Bohrung 368 und andererseits durch das Gleitstück 362 und die Führungsstäbe 364 parallel zu den Führungsstäben 364 und parallel zur Spindel 354 geführt.

Durch Drehen der Spindel 354 mittels des Antriebsmotors 56 ist somit das Gleitstück 362 zwischen den Lagerteilen 356 und 358 hin- und herbewegbar und somit entsprechend der Sensor 34 auf die Spitze 26 des Werkzeugs 14 zu- oder von dieser wegbewegbar.

Um eine elektrische Verbindung zwischen dem beweglichen Arm 32 und der Nachweisschaltung 58 herzustellen, sind, wie in Fig. 7 dargestellt, beiderseits der Spindel 354 Kontaktschienen 372 vorgesehen, welche sich ebenfalls parallel zu den Führungsstäben 364 und parallel zu der Spindel 354 erstrecken und auf welchen Schleifkontakte 374 gleiten, die am Gleitstück 362 gehalten sind und von denen elektrische Verbindungsleitungen 376 zu dem Sensor 34 führen. Die Kontaktschienen 372 sind ihrerseits über Leitungen 378 mit der Nachweisschaltung 58 verbunden.

Damit kann in jeder Position des Arms 32 relativ zu dem Gehäuse 50 des zweiten Ausführungsbeispiels eine Überwachung des Ausgangssignals A des Sensors 34 erfolgen.

Zur Festlegung der Ausgangsstellung 66 und 68 können ebenfalls, beispielsweise auf den Führungsstäben 364 mechanische Anschläge vorgesehen sein, welche die Bewegung des Gleitstücks 362 begrenzen.

In diesem Fall kann eine Nachweisschaltung 58 gemäß dem ersten Ausführungsbeispiel, dargestellt und beschrieben im Zusammenhang mit Fig. 4, Verwendung finden.

Alternativ dazu kann aber auch ohne mechanische Anschläge eine Festlegung der Ausgangsstellung 350 und der Endstellung 352 durch eine Nachweisschaltung erfolgen, wie sie als zweites Ausführungsbeispiel der Nachweisschaltung 58 gemäß Fig. 5 oder als drittes Ausführungsbeispiel der Nachweisschaltung gemäß Fig. 6 bereits dargestellt und beschrieben wurde.

Bei weiteren Varianten der bislang beschriebenen Ausführungsbeispiele besteht die Möglichkeit, den Sensor als kapazitiven Sensor oder als optischen Sensor auszubilden, welcher in gleicher Weise auf das Werkzeug 14 zubewegt wird und jeweils in seiner dem Werkzeug nächstliegenden Position mit seinem Ausgangssignal das Vorhandensein des Werkzeugs 14, insbesondere der Spitze 26, desselben anzeigt.

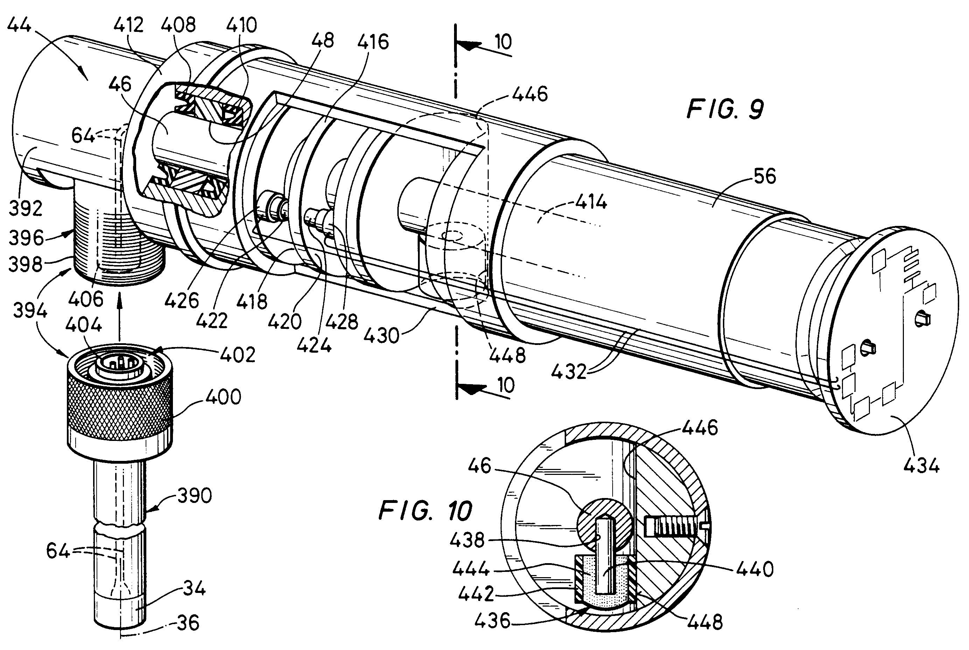

Bei einem dritten Ausführungsbeispiel der erfindungsgemäßen Einrichtung, dargestellt in Fig. 9 und 10, sind diejenigen Teile, die mit denen des ersten Ausführungsbeispiels identisch sind, mit denselben Bezugzeichen versehen. Es wird daher bezüglich der Beschreibung dieser Teile auf die Ausführungen zum ersten Ausführungsbeispiel vollinhaltlich Bezug genommen.

Im Gegensatz zum ersten Ausführungsbeispiel ist der Sensor 34 nicht durch einen Teleskoparm 32 gehalten, sondern durch einen Arm 390, welcher eine feste Länge aufweist.

Ferner ist im Gegensatz zum ersten Ausführungsbeispiel der Arm 390 nicht fest mit einem Kopf 392 der Schwenkwelle 46 verbunden, sondern mittels einer als Ganzes mit 394 bezeichneten Verschraubung, wobei die Verschraubung 394 einmal einen zylindrischen Ansatz 396 mit einem Außengewinde 398 aufweist, welcher fest auf dem Kopf 392 sitzt, sowie eine am Arm 390 drehbar, jedoch in Richtung von dessen Längsachse 36 unverschieblich gelagerte Überwurfmutter 400, welche zur Befestigung des Arms 390 am dem Kopf 392 der Schwenkwelle 46 auf das Außengewinde 398 des zylindrischen Ansatzes 396 aufschraubbar ist.

Ferner umfaßt die Verschraubung 394 noch eine innerhalb derselben angeordnete Steckverbindung 402, welche einen innerhalb der Überwurfmutter 400 angeordneten Stecker 404 und eine innerhalb des Ansatzes 396 angeordnete Buchse 406 umfaßt. Diese Steckverbindung 402 dient zur Weiterführung der im Arm 390 verlaufenden und vom Sensor 34 kommenden Leitungen 64 in den Kopf 392 und in ein Inneres der Schwenkwelle 46.

Die Schwenkwelle 46 ist - wie im Zusammenhang mit dem ersten Ausführungsbeispiel der erfindungsgemäßen Einrichtung ausgeführt - in einer Lagerbohrung 48 gelagert, zusätzlich aber bei dem dritten Ausführungsbeispiel durch zwei in Längsrichtung der Schwenkwelle 46 im Abstand voneinander angeordnete Simmerringe 408 und 410 abgedichtet, so daß keine Flüssigkeit von außerhalb in ein Inneres eines in Fig. 9 nur in Form einer Stirnwand 412 teilweise dargestellten Gehäuses einbringen kann. Der übrige Teil des Gehäuses wurde aus Gründen der Übersichtlichkeit in Fig. 9 weggelassen.

Bei dem dritten Ausführungsbeispiel gemäß. Fig. 9 und 10 stellt die Schwenkwelle 46 eine unmittelbare Fortsetzung einer Abtriebswelle 414 dar und ist daher ebenfalls durch ein zwischengeschaltetes Getriebe angetrieben. Zwischen dem Antriebsmotor 56 und der Stirnwand 412 sitzt zur Herstellung einer Verbindung mit den Leitungen 64 auf der Schwenkwelle 46 eine Scheibe 416, die beiderseits eine leitende Auflage 418 bzw. 420 trägt, wobei diese leitende Auflage beispielsweise eine Kupferkaschierung der isolierenden Scheibe 416 darstellt. Jeweils eine der leitenden Auflagen 418 und 420 ist mit einer der Leitungen 64 fest verbunden, und die Scheibe 416 sitzt fest auf der Schwenkwelle 46, so daß sie mit dieser rotiert. Auf den leitenden Auflagen 418 und 420 liegen Kontaktelemente 422 bzw. 424 auf, die in einem Sockel 426 bzw. 428 gehalten sind, wobei die Sockel 426 bzw. 428 fest mit einem inneren Gehäuserahmen 430 verbunden sind. Die Kontaktelemente 422 bzw. 424 sind dabei vorzugsweise Kontaktkohlen, die federnd von dem jeweiligen Sockel 426 bzw. 428 in Richtung der leitenden Auflagen 418 bzw.420 beaufschlagt sind und somit einen elektrischen Kontakt mit den Leitungen 64 herstellen.

Von den beiden Sockeln 426 bzw. 428 sind im Gehäuse liegende Leitungen 432 zu einer Platine 434 geführt, die vorzugsweise auf einer Rückseite des Antriebsmotors 56 sitzt.

Eine Begrenzung der Schwenkbewegung erfolgt bei dem dritten Ausführungsbeispiel durch ein fest mit der Schwenkwelle 46 verbundenes Anschlagelement 436. Dieses Anschlagelement 436 umfaßt einen in einer Bohrung 438 der Schwenkwelle 46 sitzenden Zapfen 440, welcher in radialer Richtung über die Schwenkwelle übersteht und von einem Außenring 442 umgeben ist, der vorzugsweise aus Plastik ist. Zwischen dem Zapfen und dem Außenring 442 ist dabei noch eine elastische Masse 444 vorgesehen, welche einerseits mit dem Zapfen 440 verbunden ist und andererseits mit dem Außenring 442 und somit einen zwischen dem Außenring 442 und dem Zapfen 440 liegenden ringförmigen Zwischenraum ausfüllt und gleichzeitig eine Dämpfungsfunktion ausübt.

Zur Begrenzung der Bewegungen des sich mit der Schwenkwelle 46 drehenden Anschlagelements 436 sind zwei Anschlagflächen 446 und 448 vorgesehen, welche einen halbkreisförmigen Querschnitt aufweisen, der bezüglich seines Radiuses an einen Außenquerschnitt des Außenrings 442 angepaßt ist, so daß der Außenring beim Gegenlaufen gegen die Anschlagflächen 446 bzw. 448 nicht linienförmig zur Anlage kommt, sondern im wesentlichen über seinen halben Außenumfang. Dies wird noch dadurch unterstützt, daß der Außenring 442 ebenfalls aus einem deformierbaren Material ist und die elastische Masse 444 zwischen dem Zapfen 440 und dem Außenring eine derartige Deformation des Außenrings zusätzlich unterstützt, so daß dieser mit seinem halben Umfang vollflächig an der jeweiligen Anschlagsfläche 446 bzw. 448 zur Anlage kommt und dadurch eine große Langzeitstandfestigkeit des Anschlagelements 436 erreicht wird.

Diese Langzeitstandfestigkeit wird zusätzlich noch durch die elastische Masse 444 zwischen dem Außenring 442 und dem Zapfen 440 unterstützt, da diese einerseits die Deformation des Außenrings erlaubt und andererseits eine Dämpfung bei einem abrupten Gegenlaufen des Außenrings 442 gegen die Anschlagfläche 446 bzw. 448 bewirkt.

Im übrigen ist das dritte Ausführungsbeispiel der erfindungsgemäßen Einrichtung vorzugsweise mit einer Schaltung gemäß Fig. 4 und Fig. 6 betreibbar, es ist aber auch eine Schaltung gemäß Fig. 5 verwendbar, wobei dann das Anschlagelement 436 und die Anschlagflächen 446 und 448 untergeordnete Bedeutung haben.

**Patentansprüche**

1.  Einrichtung zur Überprüfung eines in einer definierten Position stehenden Maschinenteils, insbesondere eines Werkzeugs einer Werkzeugmaschine, umfassend ein Prüfelement, welches zur Durchführung einer Prüfbewegung durch einen Antrieb von einer Ausgangsstellung auf einer Bahn relativ zu der Position des Maschinenteils bewegbar ist, und eine ein Prüfsignal abgebende Nachweisschaltung, **dadurch gekennzeichnet**, daß das Prüfelement einen berührungslosen Sensor (34) umfaßt und daß die Nachweisschaltung (58) während der Prüfbewegung ein Ausgangssignal (A) des Sensors (34) registriert und aufgrund desselben das Prüfsignal abgibt.

2. Einrichtung nach Anspruch 1, dadurch gekennzeichnet, daß der Sensor (34) zur Durchführung der Prüfbewegung zwischen der Ausgangsstellung (66, 350) und einer definierten Endstellung (68, 352) bewegbar ist.

3. Einrichtung nach Anspruch 1 oder 2, dadurch gekennzeichnet, daß die Lage der Ausgangsstellung (66, 350) und/oder der Endstellung (68, 352) einstellbar ist.

4. Einrichtung nach einem der voranstehenden Ansprüche, dadurch gekennzeichnet, daß die Ausgangsstellung (66, 350) und/oder die Endstellung (68, 352) durch ein gegen mindestens einen Anschlag (70,72; 446, 448) laufendes mechanisches Anschlagelement (74; 436) festlegbar sind.

5. Einrichtung nach Anspruch 4, dadurch gekennzeichnet, daß jeder Anschlag durch eine konkav gekrümmte Anschlagfläche (446, 448) gebildet ist.

6. Einrichtung nach Anspruch 4, dadurch gekennzeichnet, daß das Anschlagselement (436) ein Dämpfungselement (444) umfaßt.

7. Einrichtung nach einem der voranstehenden Ansprüche 4 bis 6, dadurch gekennzeichnet, daß das Anschlagselement (436) einen deformierbaren Außenmantel umfaßt.

8. Einrichtung nach einem der Ansprüche 4 bis 7, dadurch gekennzeichnet, daß das Anschlagelement (436) eine Außenquerschnittsform aufweist, welche einer Innenquerschnittsform des Anschlags (446, 448) entspricht.

9. Einrichtung nach Anspruch 3, dadurch gekennzeichnet, daß die Ausgangsstellung (66, 350) und/oder die Endstellung (68, 352) über eine Ansteuerung des Antriebs (56) einstellbar ist.

10. Einrichtung nach Anspruch 9, dadurch gekennzeichnet, daß mit der Ansteuerung ein Drehwinkel eines Antriebsmotors (56) vorgebbar ist.

11. Einrichtung nach Anspruch 9 oder 10, dadurch gekennzeichnet, daß die Ansteuerung einen Servoverstärker (242, 320) umfaßt.

12. Einrichtung nach Anspruch 11, dadurch gekennzeichnet, daß die Ansteuerung einen Rechner (322) umfaßt.

13. Einrichtung nach einem der voranstehenden Ansprüche, dadurch gekennzeichnet, daß der Sensor (34) nach der Prüfbewegung zur Ausgangsstellung (66, 350) zurückkehrt.

14. Einrichtung nach einem der voranstehenden Ansprüche, dadurch gekennzeichnet, daß die Prüfbewegung von der Bewegung des Sensors (34) auf der Bahn (42, 346) von der Ausgangsstellung (66, 350) bis zur Endstellung (68, 352) umfaßt ist.

15. Einrichtung nach einem der voranstehenden Ansprüche, dadurch gekennzeichnet, daß die Prüfbewegung in einer festgelegten Richtung auf der Bahn (42, 346) erfolgt.

16. Einrichtung nach einem der Ansprüche 2 bis 15, dadurch gekennzeichnet, daß die Prüfbewegung der Bewegung auf der Bahn (42, 346) von der Ausgangsstellung (66, 350) bis zur Endstellung (68, 352) entspricht.

17. Einrichtung nach einem der voranstehenden Ansprüche, dadurch gekennzeichnet, daß die Nachweisschaltung (58) bei einem ein Maschinenteil anzeigenden Ausgangssignal (A) des Sensors (34) während der Prüfbewegung ein Gut-Signal als Prüfsignal abgibt.

18. Einrichtung nach Anspruch 13, dadurch gekennzeichnet, daß die Nachweisschaltung (58) bei Nichtvorliegen eines ein Maschinenteil (14) anzeigenden Ausgangssignals (A) des Sensors (34) während der Prüfbewegung ein Nicht-Gut-Signal als Prüfsignal abgibt.

19. Einrichtung nach einem der voranstehenden Ansprüche, dadurch gekennzeichnet, daß vor Beginn der Prüfbewegung eine Überprüfung des Ausgangssignals (A) des Sensors (34) zur Störungsprüfung erfolgt.

20. Einrichtung nach Anspruch 19, dadurch gekennzeichnet, daß die Störungsprüfung eine Überprüfung des Sensors (34) dahingehend umfaßt, ob dieser ein ein Maschinenteil anzeigendes oder kein ein Maschinenteil anzeigendes Ausgangssignal (A) abgibt.

21. Einrichtung nach Anspruch 20, dadurch gekennzeichnet, daß bei der Störungsprüfung bei einem ein Maschinenteil (14) anzeigenden Ausgangssignal (A) des Sensors (34) eine Störungsmeldung erfolgt.

22. Einrichtung nach einem der voranstehenden Ansprüche, dadurch gekennzeichnet, daß die Bahn (42, 346) des Sensors (34) quer zur einer Längsrichtung (22) des Maschinenteils (14) verläuft.

23. Einrichtung nach einem der voranstehenden Ansprüche, dadurch gekennzeichnet, daß der Sensor (34) an einem von dem Antrieb (56) bewegten Arm (32, 390) gehalten ist.

24. Einrichtung nach Anspruch 23, dadurch gekennzeichnet, daß der Arm (32, 390) an einer Bahnführung (44, 348) gelagert ist.

25. Einrichtung nach Anspruch 23 oder 24, dadurch gekennzeichnet, daß der Arm (32) längenverstellbar ist.

26. Einrichtung nach Anspruch 24, dadurch gekennzeichnet, daß der Arm (390) durch eine lösbare Verbindung (394) an der Bahnführung (44) gehalten ist.

27. Einrichtung nach Anspruch 26, dadurch gekennzeichnet, daß der Arm (390) mit einer schnelllösbaren Verbindung (394) an der Bahnführung (44) auswechselbar gehalten ist.

28. Einrichtung nach Anspruch 26 oder 27, dadurch gekennzeichnet, daß die lösbare Verbindung (394) zur Weiterführung von Leitungen (64) zum Sensor eine elektrische Steckverbindung (402) umfaßt.

29. Einrichtung nach Anspruch 26, dadurch gekennzeichnet, daß der Arm (390) aus unterschiedlichen Armstücken aufbaubar ist.

30. Einrichtung nach einem der Ansprüche 24 bis 29, dadurch gekennzeichnet, daß die Bahnführung eine Schwenklagerung (44) ist.

31. Einrichtung nach einem der Ansprüche 24 bis 29, dadurch gekennzeichnet, daß die Bahnführung eine Linearlagerung (348) ist.

32. Einrichtung nach einem der Ansprüche 24 bis 32, dadurch gekennzeichnet, daß an der Bahnführung (44, 348) Übertragungselemente (60, 62; 372, 374) vorgesehen sind, mit welchen eine Informationsübertragung zwischen dem Sensor (34) und der Nachweisschaltung (58) erfolgt.

33. Einrichtung nach einem der voranstehenden Ansprüche, dadurch gekennzeichnet, daß der Sensor (34) ein induktiver Sensor ist.

34. Einrichtung nach einem der Ansprüche 1 bis 32, dadurch gekennzeichnet, daß der Sensor (34) ein kapazitiver Sensor ist.

35. Einrichtung nach einem der Ansprüche 1 bis 32, dadurch gekennzeichnet, daß der Sensor (34) ein optischer Sensor ist.

FIG. 1

FIG.2

FIG. 3

*FIG.4*

FIG.5

FIG.6

FIG.7

FIG.8

EP 0 481 232 A2

FIG. 9

FIG. 10